# EUROPEAN PATENT SPECIFICATION

(11) **EP 4 166 714 B1**
(45) Date of publication and mention of the grant of the patent: **04.11.2026**
(21) Application number: 21845892.5
(22) Date of filing: 06.07.2021
(51) Int. Cl.: D21C 5/02, A61F 13/15, A61F 13/551, B09B 3/00

(54) **METHOD FOR PRODUCING CLEANED RECYCLED PULP FIBERS FROM USED SANITARY MATERIALS**
VERFAHREN ZUR HERSTELLUNG GEREINIGTER RECYCELTER ZELLSTOFFFASERN AUS GEBRAUCHTEN SANITÄRMATERIALIEN
PROCÉDÉ DE PRODUCTION DE FIBRES DE PÂTE À PAPIER RECYCLÉES ET NETTOYÉES À PARTIR DE MATIÈRES SANITAIRES USÉES

(30) Priority: 20.07.2020 JP 2020124011
(43) Date of publication of application: 19.04.2023
(73) Proprietor: Unicharm Corporation, Shikokuchuo-shi, Ehime 799-0111 (JP)
(72) Inventor: KONISHI, Takayoshi, Kanonji-shi, Kagawa 769-1602 (JP); YAMAKI, Kouichi, Kanonji-shi, Kagawa 769-1602 (JP); OHASHI, Naoto, Kanonji-shi, Kagawa 769-1602 (JP); KURITA, Noritomo, Kanonji-shi, Kagawa 769-1602 (JP); BANDOH, Takeshi, Kanonji-shi, Kagawa 769-1602 (JP)
(74) Representative: Dolleymores
(86) International application number: PCT/JP2021/025505
(87) International publication number: WO 2022/019109

(56) References cited:
- EP-A1- 3 156 541
- EP-A1- 3 238 840
- EP-A1- 3 527 296
- EP-A1- 3 617 401
- EP-A1- 3 626 883
- WO-A1-2019/087489
- JP-A- 2009 183 668
- JP-A- 2013 132 600
- JP-A- 2019 178 461
- JP-A- 2019 178 986
- JP-A- H04 317 785
- JP-A- H06 502 454

## Description

### FIELD

The present disclosure relates to a method of producing cleaned recycled pulp fibers from a used sanitary article.

### BACKGROUND

There are studies conducted regarding methods for recovering recycled pulp fibers from a used sanitary article. For example, Patent Literature 1 discloses a method for recovering pulp fibers from a used sanitary article containing pulp fibers and a polymer absorbent material, the method including a step of immersing the used sanitary article in ozone water to decompose the polymer absorbent material, a step of discharging the ozone water, in which the decomposed polymer absorbent material is dissolved, to obtain a residue of the sanitary article from which the polymer absorbent material is removed, and a step of washing the residue of the sanitary article and decomposing the residue of the sanitary article in a constituent element by stirring the residue of the sanitary article, from which the polymer absorbent material is removed, in an aqueous solution containing a disinfectant or in water.
EP 3626883 A1 discloses a method of producing recycled fibers from a mixture of fibers and superabsorbent polymers.
WO 2019/087489 A1 discloses a method of recovering pulp fibers from a used absorbent article comprising pulp fibers and superabsorbent polymer.
EP 3156541 A1 discloses a method for manufacturing recycled pulp that can be reused as a sanitary product by recovering pulp fibers from a used sanitary product containing pulp fibers and superabsorbent polymer.
JP 2019 178461 discloses a recycled pulp fiber derived from used sanitary goods.
EP 3617401 A1 discloses a method of manufacturing pulp fibers for saccharification from pulp fibers of used hygiene products.

### [CITATION LIST]

### [PATENT LITERATURE]

Patent Literature 1: Japanese Unexamined Patent Publication No. 2014-217835

### SUMMARY

### [TECHNICAL PROBLEM]

It is preferable that the recycled pulp fibers recovered from the used sanitary article has a small amount of remaining components such as an excrement, a super absorbent polymer, and the like. The inventors of the present application analyzed the recycled pulp fibers recovered by the method described above, and found that a high-concentration nitrogen-containing component may remain in the recycled pulp fibers. Accordingly, an aspect of the present disclosure is to provide a method of producing cleaned recycled pulp fibers from a used sanitary article, the method capable of forming recycled pulp fibers having a low content of a nitrogen-containing component.

### [SOLUTION TO PROBLEM]

The inventors of the present disclosure found a method of producing cleaned recycled pulp fibers from a used sanitary article, the method is defined in the current claim 1.

### [ADVANTAGEOUS EFFECT OF THE INVENTION]

The method of producing cleaned recycled pulp fibers from a used sanitary article of the present disclosure can form recycled pulp fibers having a low content of a nitrogen-containing component.

### BRIEF DESCRIPTION OF DRAWINGS

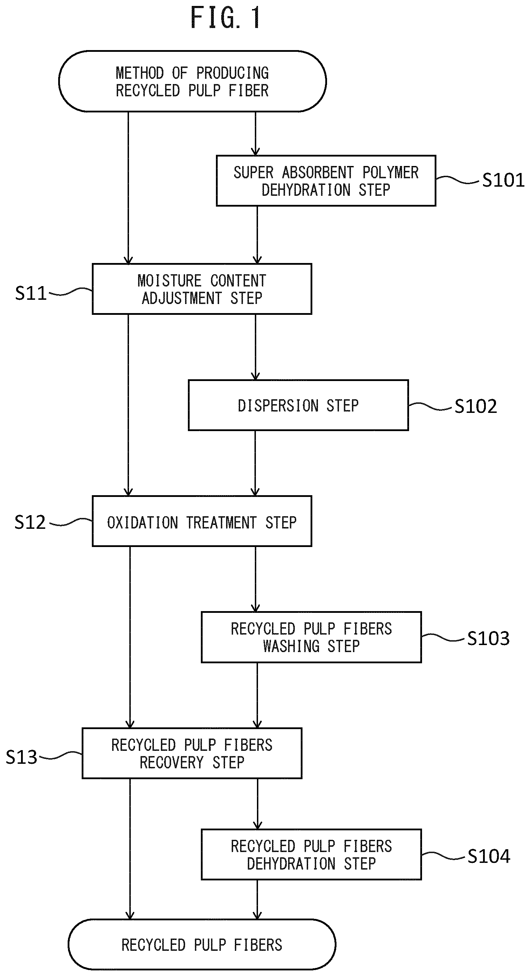

FIG. 1 is a diagram illustrating a method of producing recycled pulp fibers of the present disclosure.

### DESCRIPTION OF EMBODIMENTS

Specifically, the present disclosure relates to the following aspects.

### [Aspect 1]

A method of producing cleaned recycled pulp fibers from a used sanitary article as defined in claim 1.

The method includes the predetermined moisture content adjustment step, the oxidation treatment step, and the recycled pulp fibers recovery step. In the moisture content adjustment step, the mixture containing the pulp fibers and the super absorbent polymer is adjusted to have a predetermined moisture content. Due to that, a large amount of a nitrogen-containing component such as an excrement in the pulp fibers, particularly, inside the pulp fibers, is removed from the pulp fibers, and the nitrogen-containing component is less likely to remain in the pulp fibers. Next, in the oxidation treatment step, the oxidizing agent can properly oxidatively decompose the super absorbent polymer in the mixture, and the oxidatively decomposed super absorbent polymer can be removed. Due to that, the method described above can form the recycled pulp fibers having a low content of the nitrogen-containing component.

It should be noted that, in a case where the moisture content adjustment step is not performed, a large amount of the nitrogen-containing component such as an excrement in the pulp fibers, particularly inside the pulp fibers, is likely to remain in the pulp fibers. Due to that, in the next oxidation treatment step, the oxidizing agent is consumed in not only the oxidation of the nitrogen-containing component, but also the oxidative decomposition of the super absorbent polymer, and there is a tendency for the amount of the oxidizing agent for decomposing the super absorbent polymer to increase and also a tendency for the nitrogen-containing component to decrease easily.

### [Aspect 2]

The method according to Aspect 1, wherein
in the moisture content adjustment step, moisture of the mixture is adjusted so that the mixture contains total organic carbon (TOC) of 10.0 g/Kg or less per kg of a dry mass of the mixture.

In the method described above, in the moisture content adjustment step, moisture of the mixture is adjusted so that the mixture contains predetermined TOC. Therefore, in the moisture content adjustment step, the amount of the nitrogen-containing component contained in the mixture containing the pulp fibers and the super absorbent polymer can be decreased. Due to that, the method described above can form the recycled pulp fibers having a low content of the nitrogen-containing component.

### [Aspect 3]

The method according to Aspect 1 or 2, wherein
in the oxidation treatment step, the mixture is treated in the oxidizing agent-containing aqueous solution containing the oxidizing agent so that the oxidizing-agent-containing aqueous solution contains total organic carbon (TOC) of 3.0 g/Kg or less.

In the method described above, in the oxidation treatment step, the mixture is treated so that the oxidizing agent-containing aqueous solution contains predetermined TOC. Due to that, the method described above can form the recycled pulp fibers having a low content of the nitrogen-containing component.

### [Aspect 4]

The method according to any one of Aspects 1 to 3, further comprising:
a dispersion step of dispersing the mixture in water after the moisture content adjustment step and before the oxidation treatment step.

In the mixture containing the pulp fibers and the super absorbent polymer, the moisture content in the mixture tends to be less likely to decrease due to a high water retention property of the super absorbent polymer. Therefore, in order to adjust the moisture content in the mixture to 70 mass% or less, a compression force may be applied to the mixture. In this case, the mixture may become an agglomerate, which causes problems that it is difficult to disperse the mixture in water again, a long time is taken, and the like.

The method further includes a predetermined dispersion step after the moisture content adjustment step and before the oxidation treatment step. Therefore, the mixture agglomerated through the moisture content adjustment step is likely to be dispersed in each of the pulp fibers, the super absorbent polymer (each particle), and the like, and in the next oxidation treatment step, the super absorbent polymer is likely to be oxidatively decomposed and the nitrogen-containing component in the pulp fibers is likely to be oxidatively decomposed. Due to that, the method described above can form the recycled pulp fibers having a low content of the nitrogen-containing component.

### [Aspect 5]

The method according to Aspect 4, wherein
the washing water after the recycled pulp fibers washing step contains total organic carbon (TOC) of 1.5 g/Kg or less. In the method described above, the washing water after the recycled pulp fibers washing step contains the predetermined TOC. Due to that, the method described above can properly form the recycled pulp fibers having a low content of the nitrogen-containing component.

### [Aspect 6]

The method according to any one of Aspects 1 to 5, further comprising:
a recycled pulp fibers dehydration step of dehydrating the recycled pulp fibers so as to have a moisture content of 60 mass% or less, after the recycled pulp fibers recovery step.

The method further includes the predetermined recycled pulp fibers dehydration step after the recycled pulp fibers recovery step. Therefore, in a case of storing the recycled pulp fibers in a dry state, a drying property is excellent, and in a case of storing the recycled pulp fibers in a wet state, transportability is excellent.

### [Aspect 7]

The method according to any one of Aspects 1 to 6, further comprising:
a super absorbent polymer dehydration step of dehydrating the super absorbent polymer with a dehydrating agent, before the moisture content adjustment step.

The method further includes the predetermined super absorbent polymer dehydration step. Therefore, in the super absorbent polymer dehydration step, the amount of the nitrogen-containing component contained in the super absorbent polymer in the mixture can be decreased, and in the next moisture content adjustment step, a large amount of the nitrogen-containing component is removed from the pulp fibers, which makes the nitrogen-containing component to be less likely to remain in the pulp fibers. Due to that, the method described above can form the recycled pulp fibers having a low content of the nitrogen-containing component.

Hereinafter, the method of producing cleaned recycled pulp fibers from a used sanitary article of the present disclosure (hereinafter, may be simply referred to as a "producing method") will be described in detail. The producing method of the present disclosure includes the following steps as shown in FIG. 1.
- A moisture content adjustment step of adjusting a moisture content in a mixture containing pulp fibers and a super absorbent polymer to 70 mass% or less, the mixture being obtained from the used sanitary article containing the pulp fibers and the super absorbent polymer (hereinafter, may be simply referred to as a "moisture content adjustment step S11")
- An oxidation treatment step of treating the mixture obtained through the moisture content adjustment step with an oxidizing agent-containing aqueous solution containing an oxidizing agent, oxidatively decomposing the super absorbent polymer, dissolving the oxidatively decomposed super absorbent polymer in the oxidizing agent-containing aqueous solution, and forming the recycled pulp fibers (hereinafter, may be simply referred to as an "oxidation treatment step S12")
- A recycled pulp fibers recovery step of recovering the recycled pulp fibers (hereinafter, may be simply referred to as a "recycled pulp fibers recovery step S13")

As shown in FIG. 1, the producing method of the present disclosure can further include the following steps as optional steps.
- A super absorbent polymer dehydration step of dehydrating the super absorbent polymer with a dehydrating agent, before the moisture content adjustment step (hereinafter, may be simply referred to as a "super absorbent polymer dehydration step S101")
- A dispersion step of dispersing the mixture in water after the moisture content adjustment step and before the oxidation treatment step (hereinafter, may be simply referred to as a "dispersion step S102")
- A recycled pulp fibers washing step of washing the recycled pulp fibers with washing water after the oxidation treatment step and before the recycled pulp fibers recovery step (hereinafter, may be simply referred to as a "recycled pulp fibers washing step S103")
- A recycled pulp fibers dehydration step of dehydrating the recycled pulp fibers so as to have a moisture content of 60 mass% or less, after the recycled pulp fibers recovery step (hereinafter, may be simply referred to as a "recycled pulp fibers dehydration step S104")

### <Moisture content adjustment step S11>

In the moisture content adjustment step S11, the moisture content in the mixture containing the pulp fibers and the super absorbent polymer is adjusted to 70 mass% or less, the mixture being obtained from the used sanitary article containing the pulp fibers and the super absorbent polymer.

The sanitary article is not particularly limited, as long as it contains the pulp fibers and the super absorbent polymer, and examples thereof include a paper diaper, a urine absorbing pad, a sanitary napkin, a bed sheet, and a pet sheet. The used sanitary article means a sanitary article in a state where an excrement is absorbed.

The pulp fibers are not particularly limited, as long as they can be used as the sanitary article, and examples thereof include a wood pulp (for example, coniferous pulp or hardwood pulp), a crosslinked pulp, and a non-wood pulp.

As the super absorbent polymer, those well-known in the technical field of the sanitary article can be exemplified, and examples thereof include starch-based, cellulose-based, synthetic polymer-based super absorbent polymers. Examples of the starch-based or cellulose-based super absorbent polymers include starch-acrylic acid (salt) graft copolymers, saponified substance of starch-acrylonitrile copolymers, and crosslinked substance of sodium carboxymethyl cellulose. Examples of the synthetic polymer-based super absorbent polymer include polyacrylate-based, polysulfonate-based, maleate anhydride-based, polyacrylamide-based, polyvinyl alcohol-based, polyethylene oxide-based, polyaspartate-based, polyglutamate-based, polyalginate-based, starch-based, and cellulose-based super absorbent polymers (SAPs).

The method of obtaining the mixture containing the pulp fibers and the super absorbent polymer from the used sanitary article is not particularly limited, and, for example, the used sanitary article can be cut and the mixture containing the pulp fibers and the super absorbent polymer can be obtained from an absorbent body.

In the mixture described above, since the pulp fibers and the super absorbent polymer absorb and retain a liquid excrement, and the super absorbent polymer does not easily separate the retained liquid excrement, it is preferable to apply a force, for example, a compression force (for example, a pressure or a centrifugal force) to the mixture, in order to adjust the moisture content to 70 mass% or less. For example, the mixture is compressed by using a screw press dehydrator, a centrifugal separator, or the like to dehydrate the mixture, which makes it possible to achieve the moisture content described above.

As the screw press dehydrator, for example, a screw press dehydrator manufactured by Kawaguchi Seiki Co., Ltd. is used. The pressure applied to a lid body of the screw press dehydrator is not particularly limited, as long as the moisture content of the mixture can be adjusted to the predetermined range, and it is preferable to apply a high pressure, because the super absorbent polymer has an excellent water retention property.

The pressure is preferably greater than 1.0 MPa, more preferably greater than 1.1 MPa, and even more preferably greater than 1.2 MPa. In addition, the pressure applied to the lid body of the screw press dehydrator is preferably 5.0 MPa or less, more preferably 4.0 MPa or less, and even more preferably 3.0 MPa or less. Accordingly, this makes it easier to adjust the moisture content in the mixture to the range described above and makes it easier to secure the redispersibility of the mixture.

In the moisture content adjustment step S11, the moisture content in the mixture is adjusted to preferably 70 mass% or less, more preferably 67 mass% or less, and even more preferably 65 mass% or less. In addition, in the moisture content adjustment step S11, the moisture content in the mixture is adjusted to preferably 50 mass% or more, more preferably 53 mass% or more, and even more preferably 55 mass% or more. Accordingly, this makes it easier to decrease the amount of the nitrogen-containing component in the mixture and the amount of the nitrogen-containing component in the recycled pulp fibers to the predetermined range. It should be noted that, in the present specification, it may be referred to as a solid content in the mixture, and the solid content and the moisture content in a single mixture have a relationship in which the sum thereof is 100.

In the present specification, the moisture content is measured by using an infrared moisture meter FD-720 manufactured by Ketto Corporation. Specifically, approximately 5 g of a sample is placed on a sample dish of FD-720, a set temperature is set to 150°C, an automatic stop mode is selected, and the moisture content is measured.

In the producing method of the present disclosure, in the moisture content adjustment step S11, the moisture content in the mixture is adjusted so that the mixture has TOC of preferably 10.0 g/Kg or less, more preferably 8.0 g/Kg or less, and even more preferably 6.0 g/Kg or less per kg of the dry mass of the mixture. Accordingly, this makes it easier to decrease the amount of the nitrogen-containing component in the mixture and the amount of the nitrogen-containing component in the recycled pulp fibers to the predetermined range.

In addition, in the moisture content adjustment step, a lower limit of the TOC per kg of the dry mass of the mixture is not particularly limited, and is, for example, 0.1 g/Kg. It should be noted that the dry mass of the mixture means a mass of the mixture after the moisture content described above is measured.

In the present specification, the TOC per kg of dry mass of the mixture is measured as follows.
(1) In the moisture content adjustment step, the discharged liquid discharged from the mixture is recovered.
(2) The discharged liquid is suction-filtered with a glass fibers filter paper having a particle retention capability of 1 µm, and the discharged liquid is partitioned into a filtration residue and an extract liquid.
(3) TOC: y (g/Kg) of the extract liquid is measured using TOC-200MD manufactured by Toray Engineering D Solutions Co., Ltd.
(4) The moisture content in the mixture having the adjusted moisture content: x (mass%) is measured according to the method described in the present specification.
(5) The moisture content per kg of the dry mass of the mixture having the adjusted moisture content: a (Kg) is calculated by the following formula: $a \left(Kg\right) = x / \left(100-x\right) .$
(6) The TOC: z (g/Kg) per kg of dry mass of the mixture is calculated by the following formula: $\begin{matrix}z \left(g/Kg\right) = y x a \\ = x x y / \left(100-x\right) .\end{matrix}$

As the glass fibers filter paper, glass fibers circular filter paper GF/B manufactured by GE Health care is used.

It should be noted that TOC means total organic carbon.

In the moisture content adjustment step S11, in the mixture before the moisture content is adjusted (the mixture obtained from the used sanitary article), the super absorbent polymer may or may not be dehydrated by using the dehydrating agent. In a case where the super absorbent polymer is dehydrated by using the dehydrating agent, the super absorbent polymer has a water absorption ratio of preferably 50 times or less, more preferably 30 times or less, even more preferably 25 times or less, and still preferably 20 times or less, in the mixture before the moisture content is adjusted (the mixture obtained from the used sanitary article). Accordingly, this makes it easier to further decrease the moisture content in the moisture content adjustment step S11.

### <Super absorbent polymer dehydration step S101>

The producing method of the present disclosure can further include, as an optional step, the super absorbent polymer dehydration step S101 of dehydrating the super absorbent polymer, before the moisture content adjustment step S11. Accordingly, the amount of the nitrogen-containing component contained in the super absorbent polymer in the mixture can be decreased, and in the next moisture content adjustment step S11, a large amount of the nitrogen-containing component is removed from the pulp fibers, which makes the nitrogen-containing component to be less likely to remain in the pulp fibers.

The super absorbent polymer dehydration step S101 can be performed by immersing the mixture, for example, the used sanitary article, in the dehydrating agent-containing aqueous solution containing the dehydrating agent. Examples of the dehydrating agent include acids (for example, inorganic acids and organic acids), lime, calcium chloride, magnesium sulfate, magnesium chloride, aluminum sulfate, aluminum chloride, and the like. The acid is preferable because it is less likely to remain an ash content in the pulp fibers. In a case where the acid is used as the dehydrating agent, a pH of the dehydrating agent-containing aqueous solution is preferably 2.5 or less and more preferably 1.3 to 2.4. Accordingly, this makes it possible to sufficiently decrease the water absorption capability of the super absorbent polymer, and there is a risk of corrosion of the equipment, which makes it less likely to require a large amount of alkaline chemicals for a neutralization treatment during the waste water treatment.

Examples of the inorganic acid include a sulfuric acid, a hydrochloric acid, and a nitric acid, and the sulfuric acid is preferable from a viewpoint of not containing chlorine and cost. Examples of the organic acid include a citric acid, a tartaric acid, a glycolic acid, a malic acid, a succinic acid, an acetic acid, and an ascorbic acid, and an acid capable of forming a complex with a metal ion contained in excrement, for example, a hydroxycarbonate-based organic acid such as a citric acid, a tartaric acid, and a gluconic acid are particularly preferable. Examples of metal ions contained in excrement include calcium ions. This is because the metal ions in the excrement can be trapped and removed by a chelating effect of the acid capable of forming a complex with the metal ions contained in the excrement. In addition, the citric acid can be expected to have a high dirt component removing effect due to its cleaning effect. The super absorbent polymer dehydration step S101 can be performed according to, for example, Japanese Unexamined Patent Publication No. 2003-326161, and Patent Publications shown in the section "Oxidation treatment step S12" which will be described later.

In the super absorbent polymer dehydration step S101, the super absorbent polymer is dehydrated so that the super absorbent polymer has a water absorption ratio of preferably 50 times or less, more preferably 30 times or less, even more preferably 25 times or less, and still preferably 20 times or less.

The water absorption ratio is measured as follows.
(1) The super absorbent polymer is suspended in meshes for 5 minutes to remove moisture adhering to their surfaces, and a mass before drying: m₁ (g) is measured.
(2) The super absorbent polymer is dried at 120°C for 10 minutes, and a mass after drying: m₂ (g) is measured.
(3) The water absorption ratio (g/g) is calculated by the following equation:
$water absorption ratio \left(g/g\right) = 100 \times {m}_{1} / {m}_{2} .$

### <Oxidation treatment step S12>

In the oxidation treatment step S12, the mixture obtained through the moisture content adjustment step S11 is treated with an oxidizing agent-containing aqueous solution containing an oxidizing agent, the super absorbent polymer is oxidatively decomposed, the oxidatively decomposed super absorbent polymer is dissolved in the oxidizing agent-containing aqueous solution, and the recycled pulp fibers are formed. Examples of the oxidizing agent include ozone (for example, an ozone-containing gas), hydrogen peroxide, chlorine dioxide, peracetic acid, sodium hypochlorite, and the like. Examples of the oxidation treatment step S12 include steps disclosed in Japanese Patent Application Publication No.2014-217835, Japanese Patent Application Publication No.2016-881, Japanese Patent Application Publication No.2019-007119, Japanese Patent Application Publication No.2019-085447, Japanese Patent Application Publication No.2019-108639, Japanese Patent Application Publication No.2019-108640, and the like.

In the oxidation treatment step S12, the mixture is treated in the oxidizing agent-containing aqueous solution containing the oxidizing agent so that the oxidizing agent-containing aqueous solution contains TOC of preferably 3.0 g/Kg or less, more preferably 2.5 g/Kg or less, and even more preferably 2.0 g/Kg or less. Accordingly, this makes it easier to form the recycled pulp fibers having a low content of the nitrogen-containing component. It should be noted that, in the oxidation treatment step S12, a lower limit of the TOC of the recycled pulp fibers is not particularly limited, and is, for example, 0.5 g/Kg.

In the present specification, the TOC of the oxidizing agent-containing aqueous solution is measured as follows.
(1) The oxidizing agent-containing aqueous solution is suction-filtered with a glass fibers filter paper having a particle retention capability of 1 µm, and the discharged liquid is partitioned into a filtration residue and an extract liquid.
(2) TOC: w (g/Kg) of the extract liquid is measured using TOC-200MD manufactured by Toray Engineering D Solutions Co., Ltd. and a measured value thereof is set as TOC of the oxidizing agent-containing aqueous solution.

### <Dispersion step S102>

The producing method of the present disclosure can further include, as an optional step, the dispersion step S102 of dispersing the mixture in water, after the moisture content adjustment step S11 and before the oxidation treatment step S12. Therefore, even in a case where at least a part or the entire part of the mixture is agglomerated through the moisture content adjustment step S11, the mixture is likely to be dispersed in each of the pulp fibers, the super absorbent polymer (each particle), and the like, and in the next oxidation treatment step S12, the super absorbent polymer is likely to be oxidatively decomposed and the nitrogen-containing component in the pulp fibers is likely to be oxidatively decomposed.

For example, the dispersion step S 102 can be performed by adding water to the mixture to form a dispersed aqueous solution, and passing the dispersed aqueous solution through, for example, a pulper, a refiner, a beater, or the like. The moisture content in the mixture in the dispersed aqueous solution is preferably 80 mass% or more, more preferably 85 mass% or more, and even more preferably 90 mass% or more. In addition, the moisture content in the mixture in the dispersed aqueous solution is preferably 99.0 mass% or less, more preferably 98.5 mass% or less, and even more preferably 98.0 mass% or less. Accordingly, this makes it easier to disperse the agglomerated portion of the mixture, which has been agglomerated through the moisture content adjustment step S11, into each of the pulp fibers, the super absorbent polymer (each particle), and the like.

It is preferable that the dispersed aqueous solution contains the dehydrating agent described in the section of the super absorbent polymer dehydration step S101, from a viewpoint of suppressing the water absorption of the super absorbent polymer contained in the mixture. In the dispersion step S102, since it is sufficient that the dehydrated state of the super absorbent polymer can be maintained, the dispersed aqueous solution can contain a dehydrating agent having a low concentration (for example, 1/10 times, 1/100 times, or the like) than that of the dehydrating agent-containing aqueous solution, the dispersed aqueous solution can contain a dehydrating agent having the same concentration as that of the dehydrating agent-containing aqueous solution, and the dispersed aqueous solution may be the same as the dehydrating agent-containing aqueous solution (that is, the dehydrating agent-containing aqueous solution in the super absorbent polymer dehydration step S101 may be reused as the dispersed aqueous solution in the dispersion step S102).

### <Recycled pulp fibers recovery step S13>

In the recycled pulp fibers recovery step S13, the recycled pulp fibers are recovered. In the recycled pulp fibers recovery step S13, for example, the recycled pulp fibers can be recovered from the oxidizing agent-containing aqueous solution using, for example, a screen having a plurality of openings.

### <Recycled pulp fibers washing step S103>

The producing method of the present disclosure can further include, as an optional step, the recycled pulp fibers washing step S103 of washing the recycled pulp fibers with washing water after the oxidation treatment step S12 and before the recycled pulp fibers recovery step S13. The recycled pulp fibers washing step S 103 is not particularly limited, and the recycled pulp fibers can be washed with washing water (for example, tap water, deionized water, or the like). The washing water can be used as running water, hydrostatic water (for example, water stored in a container), or the like.

The washing water after the recycled pulp fibers washing step S103 contains TOC of preferably 1.5 g/Kg or less, more preferably 1.0 g/Kg or less, and even more preferably 0.9 g/Kg or less. Accordingly, the recycled pulp fibers having a low content of the nitrogen-containing component can be properly formed. It should be noted that a lower limit of the TOC of the recycled pulp fibers is not particularly limited, and is, for example, 0.5 g/Kg.

In the present specification, the TOC of the washing water is measured as follows.
(1) The washing water is suction-filtered with a glass fibers filter paper having a particle retention capability of 1 µm, and the discharged liquid is partitioned into a filtration residue and an extract liquid.
(2) TOC: w (g/Kg) of the extract liquid is measured using TOC-200MD manufactured by Toray Engineering D Solutions Co., Ltd. and a measured value thereof is set as TOC of the washing water.

### <Recycled pulp fibers dehydration step S104>

The producing method of the present disclosure can further include, as an optional step, the recycled pulp fibers dehydration step S104 of dehydrating the recycled pulp fibers so as to have a moisture content of 60 mass% or less, after the recycled pulp fibers recovery step S13.

In the recycled fibers dehydration step, the recycled pulp fibers can be dehydrated so as to have a moisture content of preferably 60 mass% or less and more preferably 50 mass% or less. Therefore, in a case of storing the recycled pulp fibers in a dry state, a drying property is excellent, and in a case of storing the recycled pulp fibers in a wet state, transportability is excellent. The recycled fibers dehydration step can be performed using, for example, a pressure-type dehydrator, for example, a screw press dehydrator manufactured by Kawaguchi Seiki Co., Ltd. Examples

Hereinafter, the present disclosure will be described with reference to examples, but the present disclosure is not limited to these examples.

### Example 1

### <Super absorbent polymer dehydration step S101 and the like>

According to a perforation step S11, a pulverization step S12, a first separation step S13, a first dust removing step S14, a second dust removing step S15, and a third dust removing step S16 (a bag breaking device 11, a pulverization device 12, a first separation device 13, a first dust removing device 14, a second dust removing device 15, a third dust removing device 16, and a second separation device 17) disclosed in Japanese Patent Application Publication No. 2019-085447, a mixture No. 1a (moisture content: 91 mass%) containing pulp fibers and a super absorbent polymer is obtained from a collection bag containing a used paper diaper.

It should be noted that, in the super absorbent polymer dehydration step S101, the pH of the dehydrating agent-containing aqueous solution was adjusted to 2.0 by adding citric acid.

### <Moisture content adjustment step S11>

The mixture No. 1a was put to a screw press dehydrator manufactured by Kawaguchi Seiki Co., Ltd., a pressure of 1.2 MPa was applied to a lid body, and a discharged liquid and a mixture No. 1b (moisture content: 70 mass%) was obtained.

A TOC of mixture No. 1b was calculated from the TOC of the discharged liquid and the moisture content of the mixture No. 1b. The TOC of the mixture No. 1b is shown in Table 1. In addition, the TOC of the mixture No. 1a was calculated from the TOC of the discharged liquid and the moisture content of the mixture No. 1a. The TOC of the mixture No. 1a is shown in Table 1.

### <Dispersion step S102>

Water was added to the mixture No. 1b and passed through a refiner manufactured by Satomi Corporation, and a mixture No. 1c (solid content: 4.0 mass%) in which pulp fibers and a super absorbent polymer were dispersed in water was obtained.

### <Oxidation treatment step S12>

The mixture No. 1c was adjusted to have a solid content of 1.0 mass%, the oxidation treatment step S12 was performed under the following conditions according to an oxidizing agent treatment step S19 (ozone treatment device 22) disclosed in Japanese Patent Application Publication No. 2019-085447 to form recycled pulp fibers No. 1a. A TOC of the oxidizing agent-containing aqueous solution after forming the recycled pulp fibers No. 1a is shown in Table 1.
- Oxidizing agent: ozone-containing gas
- Ozone concentrations in ozone-containing gas: 200 g/m³
- Shape: Nanobubbles
- Treatment time: 30 minutes
- pH: 4.5

### <Recycled pulp fibers recovery step S13>

The recycled pulp fibers No. 1a obtained through the oxidation treatment step S12 was dehydrated to obtain recycled pulp fibers No. 1b.

### Example 2

Recycled pulp fibers No. 2 were obtained in the same manner as in Example 1, except for adding the recycled pulp fibers washing step S103 of extracting the recycled pulp fibers No. 1b obtained through the oxidation treatment step S12, and washing the recycled pulp fibers No. 1a with running water for 3 minutes by using deionized water having the amount 40 times the dry mass of the recycled pulp fibers No. 1b as the washing water, after the oxidation treatment step S12 and before the recycled pulp fibers recovery step S13. A TOC of the washing water after obtaining the recycled pulp fibers No. 2 is shown in Table 1. It should be noted that the dry mass of the recycled pulp fibers means a mass after the recycled pulp fibers are dried in an oven at a temperature of 105°C ± 3°C for 2 hours.

### Example 3

Recycled pulp fibers No. 3 were obtained in the same manner as in Example 1, except for adding the recycled pulp fibers washing step S103 of extracting the recycled pulp fibers No. 1b obtained through the oxidation treatment step S12, and washing the recycled pulp fibers No. 1a with running water for 60 minutes by using deionized water having the amount 40 times the dry mass of the recycled pulp fibers No. 1b as the washing water, after the oxidation treatment step S12 and before the recycled pulp fibers recovery step S13. A TOC of the washing water after obtaining the recycled pulp fibers No. 3 is shown in Table 1.

### Example 4

Recycled pulp fibers No. 4 were obtained in the same manner as in Example 1, except for adding the recycled pulp fibers washing step S103 of extracting the recycled pulp fibers No. 1b obtained through the oxidation treatment step S12, adding deionized water as the washing water so that the moisture content of the recycled pulp fibers No. 1b is 99 mass%, and washing the recycled pulp fibers No. 1a, after the oxidation treatment step S12 and before the recycled pulp fibers recovery step S13. A TOC of the washing water after obtaining the recycled pulp fibers No. 4 is shown in Table 1.

### Comparative Example 1

Recycled pulp fibers No. 5 were obtained in the same manner as in Example 1, except that the moisture content adjustment step S11 and the dispersion step S102 are not performed. The TOC of the mixture No. 1a and the oxidizing agent-containing aqueous solution are shown in Table 1.

### Comparative Example 2

Recycled pulp fibers No. 6 were obtained in the same manner as in Comparative Example 1, except for adding the recycled pulp fibers washing step S103 of extracting the recycled pulp fibers No. 5 obtained through the oxidation treatment step S12, and washing the recycled pulp fibers No. 5 with running water for 3 minutes by using deionized water having the amount 40 times the dry mass of the recycled pulp fibers No. 5 as the washing water, after the oxidation treatment step S12 and before the recycled pulp fibers recovery step S13. A TOC of the washing water after obtaining the recycled pulp fibers No. 6 was approximately half of the oxidizing agent-containing aqueous solution before washing.

### [Table 1]

**Table 1**

| No. | | .TOC (g/Kg) |
|---|---|---|
| Example 1 | Mixture No. 1a (before adjusting moisture content) | 22.0 |
| | Mixture No. 1b (after adjusting moisture content) | 5.2 |
| | Oxidizing agent-containing aqueous solution | 1.6 |
| Example 2 | Washing water | 1.20 |
| Example 3 | Washing water | 0.86 |
| Example 4 | Washing water | 0.95 |
| Comparative Example 1 | Mixture No. 1a (before adjusting moisture content) | 22.0 |
| | Oxidizing agent-containing aqueous solution | 10.0 |
| Comparative Example 2 | Washing water | (5) |

### REFERENCE SIGNS LIST

S11 Moisture content adjustment step
S12 Oxidation treatment step
S13 Recycled pulp fibers recovery step
S101 Super absorbent polymer dehydration step
S102 Dispersion step
S103 Recycled pulp fibers washing step
S104 Recycled pulp fibers dehydration step

## Claims

1. A method of producing cleaned recycled pulp fibers from a used sanitary article, the method comprising:
a moisture content adjustment step of adjusting a moisture content in a mixture containing pulp fibers and a super absorbent polymer to between 50 mass% and 70 mass%, the mixture being obtained from the used sanitary article containing the pulp fibers and the super absorbent polymer;
an oxidation treatment step of treating the mixture obtained through the moisture content adjustment step with an oxidizing agent-containing aqueous solution containing an ozone-containing gas, oxidatively decomposing the super absorbent polymer, dissolving the oxidatively decomposed super absorbent polymer in the oxidizing agent-containing aqueous solution, and forming the recycled pulp fibers;
a recycled pulp fibers washing step of washing the recycled pulp fibers with washing water; and
a recycled pulp fibers recovery step of recovering the recycled pulp fibers.

2. The method according to Claim 1, wherein
in the moisture content adjustment step, moisture of the mixture is adjusted so that the mixture contains total organic carbon (TOC) of 10.0 g/Kg or less per kg of a dry mass of the mixture.

3. The method according to Claim 1 or 2, wherein
in the oxidation treatment step, the mixture is treated in the oxidizing agent-containing aqueous solution containing the oxidizing agent so that the oxidizing agent-containing aqueous solution contains total organic carbon (TOC) of 3.0 g/Kg or less.

4. The method according to any one of Claims 1 to 3, further comprising:
a dispersion step of dispersing the mixture in water after the moisture content adjustment step and before the oxidation treatment step.

5. The method according to Claim 1, wherein
the washing water after the recycled pulp fibers washing step contains total organic carbon (TOC) of 1.5 g/Kg or less.

6. The method according to any one of Claims 1 to 5, further comprising:
a recycled pulp fibers dehydration step of dehydrating the recycled pulp fibers so as to have a moisture content of 60 mass% or less, after the recycled pulp fibers recovery step.

7. The method according to any one of Claims 1 to 6, further comprising:
a super absorbent polymer dehydration step of dehydrating the super absorbent polymer with a dehydrating agent, before the moisture content adjustment step.

## Patentansprüche

1. Verfahren zur Herstellung von gereinigten recycelten Zellstofffasern aus einem benutzten Hygieneartikel, wobei das Verfahren Folgendes umfasst:
einen Einstellungsschritt für den Feuchtigkeitsgehalt des Einstellens eines Feuchtigkeitsgehalts in einer Mischung, die Zellstofffasern und ein superabsorbierendes Polymer enthält, auf zwischen 50 Masse-% und 70 Masse-%, wobei die Mischung aus dem benutzten Hygieneartikel, der die Zellstofffasern und das superabsorbierende Polymer enthält, erhalten wird;
einen Oxidationsbehandlungsschritt von Folgendem: Behandeln der Mischung, die aus dem Einstellungsschritt für den Feuchtigkeitsgehalt erhalten wird, mit einer Oxidationsmittel-haltigen wässrigen Lösung, die ein ozonhaltiges Gas enthält, oxidatives Zersetzen des superabsorbierenden Polymers, Lösen des oxidativ zersetzten superabsorbierenden Polymers in der Oxidationsmittel-haltigen wässrigen Lösung und Bilden der recycelten Zellstofffasern;
einen Waschschritt für recycelte Zellstofffasern des Waschens der recycelten Zellstofffasern mit Waschwasser; und
einen Gewinnungsschritt für recycelte Zellstofffasern des Gewinnens der recycelten Zellstofffasern.

2. Verfahren nach Anspruch 1, wobei
in dem Einstellungsschritt für den Feuchtigkeitsgehalt die Feuchtigkeit der Mischung eingestellt wird, sodass die Mischung einen gesamten organischen Kohlenstoff (TOC) von 10,0 g/kg oder weniger pro kg einer Trockenmasse der Mischung enthält.

3. Verfahren nach Anspruch 1 oder 2, wobei
in dem Oxidationsbehandlungsschritt die Mischung in der Oxidationsmittel-haltigen wässrigen Lösung, die das Oxidationsmittel enthält, behandelt wird, sodass die Oxidationsmittel-haltige wässrige Lösung einen gesamten organischen Kohlenstoff (TOC) von 3,0 g/kg oder weniger enthält.

4. Verfahren nach einem der Ansprüche 1 bis 3, das weiter Folgendes umfasst:
einen Dispersionsschritt des Dispergierens der Mischung in Wasser nach dem Einstellungsschritt für den Feuchtigkeitsgehalt und vor dem Oxidationsbehandlungsschritt.

5. Verfahren nach Anspruch 1, wobei
das Waschwasser nach dem Waschschritt für recycelte Zellstofffasern einen gesamten organischen Kohlenstoff (TOC) von 1,5 g/kg oder weniger enthält.

6. Verfahren nach einem der Ansprüche 1 bis 5, das weiter Folgendes umfasst:
einen Entwässerungsschritt für recycelte Zellstofffasern des Entwässerns der recycelten Zellstofffasern, sodass ein Feuchtigkeitsgehalt von 60 Masse-% oder weniger vorliegt, nach dem Gewinnungsschritt für recycelte Zellstofffasern.

7. Verfahren nach einem der Ansprüche 1 bis 6, das weiter Folgendes umfasst:
einen Entwässerungsschritt für superabsorbierendes Polymer des Entwässerns des superabsorbierenden Polymers mit einem entwässernden Mittel, vor dem Einstellungsschritt für den Feuchtigkeitsgehalt.

## Revendications

1. Procédé de production de fibres de pâte à papier recyclées nettoyées à partir d'un article sanitaire usagé, le procédé comportant les étapes suivantes :
une étape d'ajustement de la teneur en humidité consistant à ajuster la teneur en humidité d'un mélange contenant des fibres de pâte à papier et un polymère superabsorbant à une valeur comprise entre 50 % en masse et 70 % en masse, le mélange étant obtenu à partir de l'article sanitaire usagé contenant les fibres de pâte à papier et le polymère superabsorbant ;
une étape de traitement par oxydation consistant à traiter le mélange obtenu par l'étape d'ajustement de la teneur en humidité avec une solution aqueuse contenant un agent oxydant qui contient un gaz contenant de l'ozone, puis à décomposer par oxydation le polymère superabsorbant, à dissoudre le polymère superabsorbant décomposé par oxydation dans la solution aqueuse contenant l'agent oxydant et à former les fibres de pâte à papier recyclées ;
une étape de lavage de fibres de pâte à papier recyclées consistant à laver les fibres de pâte à papier recyclées avec de l'eau de lavage ; et
une étape de récupération de fibres de pâte à papier recyclées consistant à récupérer les fibres de pâte à papier recyclées.

2. Procédé selon la revendication 1, dans lequel
au cours de l'étape d'ajustement de la teneur en humidité, l'humidité du mélange est ajustée de telle sorte que le mélange contient une quantité de carbone organique total (COT) égale ou inférieure à 10,0 g/kg par kg d'une masse sèche du mélange.

3. Procédé selon la revendication 1 ou la revendication 2, dans lequel
au cours de l'étape de traitement par oxydation, le mélange est traité dans la solution aqueuse contenant l'agent oxydant qui contient l'agent oxydant de telle sorte que la solution aqueuse contenant l'agent oxydant contient une quantité de carbone organique total (COT) inférieure ou égale à 3,0 g/kg.

4. Procédé selon l'une quelconque des revendications 1 à 3, comportant par ailleurs :
une étape de dispersion consistant à disperser le mélange dans de l'eau après l'étape d'ajustement de la teneur en humidité et avant l'étape de traitement par oxydation.

5. Procédé selon la revendication 1, dans lequel
l'eau de lavage après l'étape de lavage des fibres de pâte à papier recyclée contient une quantité de carbone organique total (COT) inférieure ou égale à 1,5 g/kg.

6. Procédé selon l'une quelconque des revendications 1 à 5, comportant par ailleurs :
une étape de déshydratation de fibres de pâte à papier recyclées consistant à déshydrater les fibres de pâte à papier recyclées de manière à obtenir une teneur en humidité inférieure ou égale à 60 % en masse, après l'étape de récupération des fibres de pâte à papier recyclées.

7. Procédé selon l'une quelconque des revendications 1 à 6, comportant par ailleurs :
une étape de déshydratation de polymère superabsorbant consistant à déshydrater le polymère superabsorbant avec un agent déshydratant, avant l'étape d'ajustement de la teneur en humidité.
